# EUROPEAN PATENT SPECIFICATION

(11) **EP 0 538 852 B1**
(45) Date of publication and mention of the grant of the patent: **17.09.1997**
(21) Application number: 92118074.1
(22) Date of filing: 22.10.1992
(51) Int. Cl.: G11B 5/127, G11B 5/23

(54) **Magnetic head**
Magnetkopf
Tête magnétique

(30) Priority: 23.10.1991 JP 302744/91
(43) Date of publication of application: 28.04.1993
(73) Proprietor: HITACHI, LTD., Chiyoda-ku, Tokyo 101 (JP)
(72) Inventor: Naito, Takashi, Hitachiota-shi (JP); Namekawa, Takashi, Hitachi-shi (JP); Kato, Akira, Mito-shi (JP); Suzuki, Yasutaka, Taga-gun, Ibaraki-ken (JP); Arikawa, Kouji, Katsuta-shi (JP); Ohata,Tsukasa, Katsuta-shi (JP); Yamamura, Shigeki, Katsuta-shi (JP); Gunji, Hideki, Hitachi-shi (JP)
(74) Representative: Beetz & Partner Patentanwälte

(56) References cited:
- EP-A- 0 221 697
- PATENT ABSTRACTS OF JAPAN vol. 13, no. 475 (P-950)(3823) 27 October 1989 & JP-A-1185810
- PATENT ABSTRACTS OF JAPAN vol. 12, no. 309 (P-748)(3156) 23 August 1988 & JP-A-63 079 212
- PATENT ABSTRACTS OF JAPAN vol. 14, no. 535 (C-781)26 November 1990 & JP-A-22 25 336
- PATENT ABSTRACTS OF JAPAN vol. 14, no. 321 (P-1074)(4264) 10 July 1990 & JP-A-21 05 304

## Description

### Background of the Invention

This invention relates to a magnetic head mounted on a magnetic recording/reproducing device, and more particularly to a high-performance magnetic head excellent in mass-producibility and reliability.

Recently, in order to achieve a high-density recording of a magnetic recording/reproducing device, a high-coercivity design of an information recording medium, a wide band of recording/reproducing frequency, a high-speed design of a recording tape and disk, and so on have been adopted, and conventional ferrite heads can not meet such a demand. Therefore, magnetic films, which constitute a magnetic core and are made of a material higher in saturation magnetic flux density than ferrite, such as an amorphous Co based alloy, a Sendust alloy, Fe-C based material and Fe-N based material, have now attracted attention. These magnetic films are about twice higher in saturation magnetic flux density than ferrite, and therefore it has been expected that a magnetic head using such a magnetic film would achieve a marked high-density recording. However, since such magnetic films are lower in thermostability than ferrite, bonding glass for the conventional ferrite head can no longer be used. Therefore, oxide glass (e.g. PbO-B₂O₃ glass) which comprises lead element as a main constituent element and is capable of glass bonding at low temperature, has now been mainly used. This glass is used because among low-temperature bonding glasses, it exhibits good chemical stability. However, this glass is still unsatisfactory in such chemical stability as water-resistance and moisture durability and such a mechanical property as workability, and besides this glass tends to erode the magnetic film, which results in a problem that a magnetic head excellent in mass-producibility and reliability can not be obtained. Therefore, in order to solve these problems, glass compositions and magnetic heads as disclosed in Japanese Patent Unexamined Publication Nos. 62-78128, 62-88109 and 2-225336 have been proposed. These inventions relate to oxide glass which comprises vanadium element as one of main constituent elements, and is capable of low-temperature glass bonding, and is improved in chemical stability, mechanical property and erosion against the magnetic film, and also relate to a high-performance magnetic head in which a pair of magnetic cores opposed to each other with a microscopic gap therebetween are bonded together using this glass, thereby enhancing the reliability of the magnetic head. Depending on the thermal expansion coefficient and the thermostability of the magnetic film to be used, the bonding glass for this magnetic head can be modified in various ways. On the other hand, in a magnetic head using the conventional oxide glass (e.g. PbO-B₂O₃ glass) comprising lead element as a main constituent element, although the characteristics inherent to the glass can not be changed, a layer or layers of Cr and/or SiO₂ glass is provided in order to prevent or restrain the erosion against the magnetic film as shown, for example, in U.S. Patent No. 5,047,885. Further, since the Cr layer has a good wettability with the conventional glass, the amount of residual voids at the time of the glass filling or the glass bonding is extremely small. Also, since the SiO₂ glass layer exhibits a high reactivity with the conventional glass, the bonding strength can be increased.

In the above prior art, since no consideration has been given to voids produced at the time of the glass filling and the glass bonding with respect to the magnetic head, the magnetic head, which sufficiently utilizes the characteristics of oxide glass for bonding comprising vanadium element as one of the main constituent elements, has not been obtained at a satisfactory yield rate. If any residual void or cell is present on a sliding surface of the magnetic head, a magnetic medium is jammed by the boids when a magnetic tape or the like is caused to run, which results in a problem that the performance of the magnetic head is degraded. Such a magnetic head is a defective one, and can not be mounted on a product. Further, if many voids are present on the glass bonding surface of the magnetic head, the expected strength of the head tip can not be obtained, and the magnetic head may be broken when processing and assembling the head tip or during the travel of the recording tape.

In the Cr and/or the SiO₂ glass in the prior art using the oxide glass (e.g. PbO-B₂O₃ glass) comprising lead element as a main constituent element, the prevention of the erosion against the magnetic film and the enhanced bonding strength are not compatible with each other. Since the conventional glass hardly reacts with the Cr layer, a high bonding strength can not be obtained. Since the conventional glass has a high reactivity with the SiO₂ glass layer, it penetrates through this layer to erode the magnetic film. Further, even if such a layer is provided, the conventional glass intrudes into a gap, and may erode the magnetic film at the gap portion which is the most important portion of the magnetic head.

EP-A-0 221 687 discloses a magnetic head whereof the joint parts of magnetic cores or the joint parts and a magnetic gap part are bonded with a bonding glass containing 55 to 70 % by weight of V₂O₅, 17 to 25 % by weight of P₂O₅, 3 to 20 % by weight of Sb₂O₃ and optionally, by weight, up to 20 % PbO, up to 15 % Tl₂O and up to 5 % Nb₂O₅.

Patent Abstracts of Japan, Vol. 13, No. 475 (P-950) [3823], 27.10.89, & JP-A-1-185810 is used for the delimitation of claim 1 and discloses a magnetic head having cores bonded by glass. The magnetic thin films of said cores are provided with metal thin films including Al, Cr, Pb, V and Ti prior to bonding said cores by glass.

### Summary of the Invention

It is an object of this invention to provide a high-performance magnetic head in which voids, occurring at the time of the glass filling and the glass bonding in the magnetic head using oxide glass comprising vanadium element as one of main constituent elements, are suitably eliminated to reduce the amount of residual voids, thereby achieving excellent mass-producibility and reliability.

Another object is to provide a magnetic head in which the magnetic head uses oxide glass, such as PbO-B₂O₃ glass, comprising lead element as a main constituent element, and the erosion against a magnetic film is restrained as much as possible, and the bonding strength is increased as much as possible.

In order to achieve the above objects, in the present invention, a pair of magnetic cores comprising magnetic films of a high saturation magnetic flux density formed respectively on substrates are opposed to each other with a magnetic gap provided therebetween, and the magnetic head is bonded by oxide glass comprising vanadium element as one of main constituent elements, and an intervening oxide layer containing at least one of the constituent elements of the bonding glass is provided between the bonding glass and a material to be bonded. Preferably, the intervening layer should contain at least vanadium oxide. Preferably, the intervening layer should contain an element capable of forming an oxide having a melting point equal to or higher than a melting point of silicon oxide.

Also, in the present invention, a pair of magnetic cores comprising magnetic films of a high saturation magnetic flux density formed respectively on substrates are opposed to each other with a magnetic gap provided therebetween, and the magnetic head is bonded by glass, and an intervening oxide layer containing at least vanadium oxide is provided between the bonding glass and a material to be bonded. This bonding glass may be conventionally-used oxide glass comprising lead element as a main constituent element.

The intervening layer defined here means the layer which exists between the magnetic film and the bonding glass and is in direct contact with the bonding layer in the magnetic head in which the pair of magnetic cores comprising the magnetic films of a high saturation magnetic flux density formed respectively on the substrates are opposed to each other with the magnetic gap provided therebetween, and the magnetic head is bonded by glass.

In the present invention, the pair of magnetic cores comprising magnetic films of a high saturation magnetic flux density formed respectively on the substrates are opposed to each other with the magnetic gap provided therebetween, and the magnetic head is bonded by the oxide glass comprising vanadium element as one of main constituent elements, and the intervening layer containing at least one of the constituent elements of the bonding glass is provided between the bonding glass and the material to be bonded. With this construction, voids occurring at the time of the glass filling and the glass bonding, and particularly voids deposited on the material to be bonded are liable to move, so that the residual voids can be greatly reduced. The reason for this is that since the intervening layer contains the constituent element of the bonding glass, the wett-ability is improved. When the amount of the voids is thus decreased, excellent characteristics of the bonding glass can be sufficiently utilized, and the high-performance magnetic head excellent in mass-producibility and reliability can be obtained. This effect is conspicuous particularly when the intervening layer contains vanadium oxide or lead oxide which is the main constituent of the bonding glass. Since the intervening layer comprises an oxide, its reactivity with the bonding glass is enhanced, so that the bonding strength is increased, and therefore the magnetic head is less subjected to breakage. The bonding glass is less liable to erode the magnetic film than the conventional oxide glass (e.g. PbO-B₂O₃) comprising lead element as a main constituent element. However, in order to obtain the magnetic head with a higher performance, it is necessary to further restrain this erosion. To achieve this, it is necessary to enhance the thermostability, and preferably, the intervening layer should contain an element capable of forming an oxide having a melting point equal to or higher than a melting point of silicon oxide. Such a high melting point oxide has a considerably high hardness, and therefore contributes to the wear resistance of the magnetic head against the sliding movement of a recording tape or a disk.

Also, in the present invention, the pair of magnetic cores comprising the magnetic films of a high saturation magnetic flux density formed respectively on the substrates are opposed to each other with the magnetic gap provided therebetween, and the magnetic head is bonded by the glass, and the intervening layer containing at least vanadium oxide is provided between the bonding glass and the material to be bonded. With this construction, the reaction with the magnetic film can be restrained. More specifically, for example, if vanadium oxide is contained in the conventional oxide glass, comprising lead oxide as a main constituent element, and the highly-reactive SiO₂ glass intervening layer, a suitable reaction occurs, thereby further restraining the erosion for the magnetic film. Therefore, there is another advantage that a suitable bonding strength can also be obtained.

### Bried Explanation of the Drawings

Fig. 1 is a perspective view of a magnetic head used in Examples of the present invention;
Fig. 2 is a view showing a step of a method of producing the magnetic head of the present invention;
Fig. 3 is a view showing a step of the method of producing the magnetic head of the present invention;
Fig. 4 is a view showing a step of the method of producing the magnetic head of the present invention;
Fig. 5 is a view showing a step of the method of producing the magnetic head of the present invention;
Fig. 6 is a sectional view showing a structure of a bonding interface portion of an intervening layer defined in the present invention;
Fig. 7 is a sectional view showing a structure of a bonding interface portion of an intervening layer defined in the present invention; and
Fig. 8 is a sectional view showing a structure of a bonding interface portion of an intervening layer defined in the present invention.

### Preferred Embodiments of the Invention

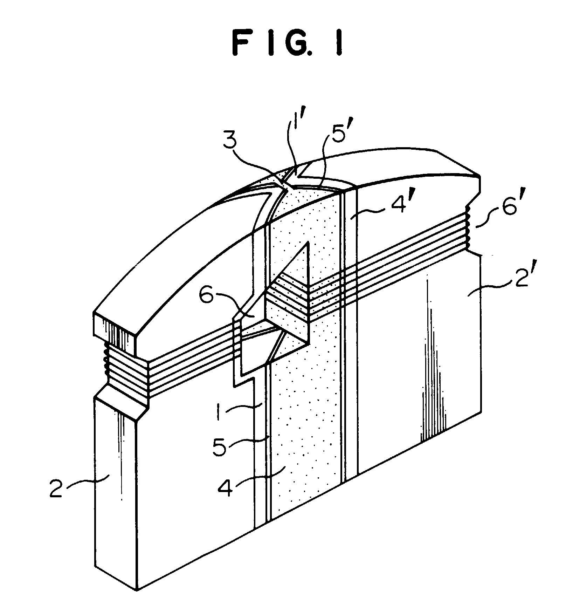

The present invention will now be described by way of Examples. Fig. 1 is a perspective view of a magnetic head according to the present invention. Reference numerals 1, 1' denote magnetic films of a high saturation magnetic flux density, reference numerals 2, 2' substrates for forming these magnetic films, reference numeral 3 a magnetic gap, reference numerals 4, 4' bonding glass, reference numerals 5, 5' intervening layers each interposed between the bonding glass and the material to be bonded, reference numeral 6 a coil winding window, and reference numeral 6' a coil. Here, the material to be bonded in the magnetic head is the magnetic film.

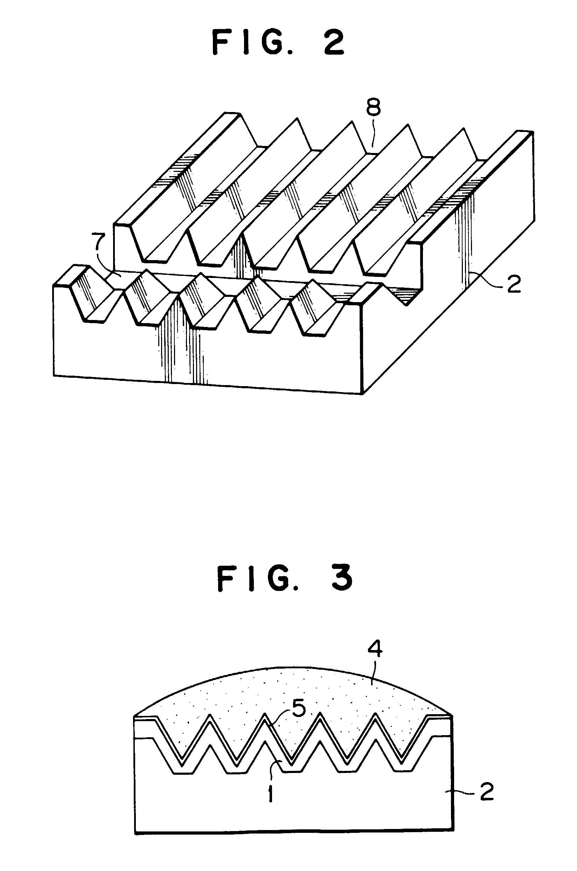

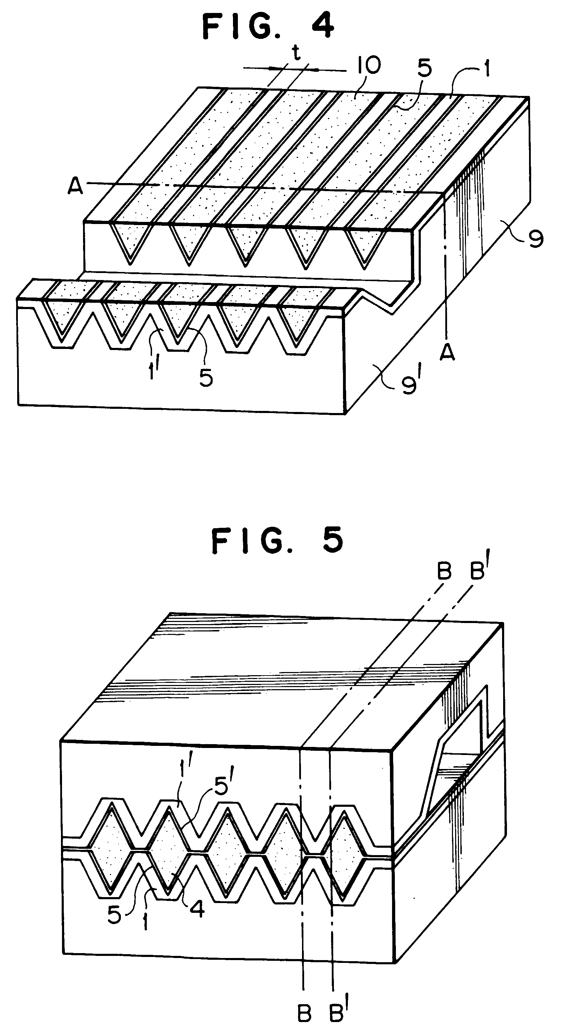

A method of producing the magnetic head shown in Fig. 1 will now be described. For producing the magnetic head of Fig. 1, first, as shown in Fig. 2, a groove 7 for forming the coil winding window, as well as track grooves 8, is formed in the substrate 2 to form a gap butting surface. This is sufficiently washed, and then, as shown in Fig. 3, the magnetic film 1 is formed on the gap butting surface by sputtering, and the intervening layer 5 is formed on this magnetic film by sputtering, and the bonding glass 4 is filled in the track grooves 8 at a temperature lower than the limit temperature which the magnetic film can withstand. Then, as shown in Fig. 4, unnecessary part of the glass as well as unnecessary part of the magnetic film is removed by polishing to thereby provide the coil winding window groove 7 and the required track width t on the gap butting surface, and this structure is cut off at a position indicated in a dot-and-dash line A to produce a pair of magnetic core blocks 9 and 9'. These magnetic core blocks are sufficiently washed, and then a predetermined amount of non-magnetic gap material 10 is sputtered on the gap butting surface of each of these core blocks, and as shown in Fig. 5, they are butted against each other, and bonded together at a temperature lower than the limit temperature which the magnetic film can withstand. Then, this structure is cut off at positions indicated respectively in dot-and-dash lines B and B' to produce the magnetic head shown in Fig. 1.

The kinds of the magnetic film used in the Examples are shown in Table 1. For comparison purposes, single crystal Mn-Zn ferrite often used in a magnetic head for a VTR or the like is also shown. Amorphous Co based alloy and Sendust alloy are extremely higher in saturation magnetic flux density than ferrite, and therefore give a great influence on the high-performance design of the magnetic head. However, since they have a low thermostability, the glass filling and the glass bonding must be carried out at temperatures lower than the limit temperature which they can withstand.

The kinds of the substrate 2 used in the Examples are shown in Table 2. Preferably, the substrate for the magnetic head should have a micro Vickers hardness Hv of not less than 600 from the viewpoint of wear resistance. Further, the thermal expansion coefficient of the substrate must be close to a certain extent to that of the magnetic film, and therefore in the Examples, the substrates a and b of Table 2 were used for the magnetic film A of Table 1, and the substrate c was used for the magnetic film B.

The kinds of the bonding glass used in the Examples are shown in Table 3. In view of the fact that the bonding glass was used in the magnetic head, the filling/bonding temperature in this Table was so determined that the viscosity of the glass could be about 10,4 Pa·s (104 poise). The micro Vickers hardness Hv was measured at an indentator load of 100 gf at a load time of 15 sec. In that case, when the glass was not broken, a mark "○" is given, and when the glass was broken, a mark "×" is given. The brittleness was also evaluated at the same time. A glass piece formed into a cubic shape one side of which was 5 mm was dipped in 40 cc of distilled water at 70°C for 2 hours, and a change in the glass surface and a change in the glass weight were measured to evaluate the water durability. When both of the surface change and the weight change were hardly recognized, a mark "○" is given, and when either of the two changes was recognized, a mark "×" is given. As can be seen from Table 3, glass Nos. 1 to 3 which are oxide glass comprising vanadium element as one of main constituent elements exhibit better mechanical properties and water durability than glass Nos. 4 and 5 which are the conventional oxide glass comprising lead element as a main constituent element. In the Examples, in view of the thermal expansion coefficient of the magnetic film to be used and the limit temperature which the magnetic film can withstand, the kinds of glass which were thought to have the appropriate filling/bonding temperature and the appropriate thermal expansion coefficient were selected. The bonding glass used in the present invention comprises vanadium as an essential element, more particularly 35 to 62 percent by weight of vanadium in terms of V₂O₅, 17 to 50 percent by weight of phosphour in terms of P₂O₅, 0 to 30 percent by weight of antimony in terms of Sb₂O₃, 0 to 40 percent by weight of lead in terms of PbO, 0 to 20 percent by weight of thallium in terms of Tl₂O, and 0 to 5 percent by weight of at least one selected from the group consisting of niobium in terms of Nb₂O₅, germanium in terms of GeO₂, barium in terms of BaO, tellulium in terms of TeO₂, sodium in terms of Na₂O, potassium in terms of K₂O, rubidium in terms of Rb₂O and cesium in terms of Cₛ₂O. Other ingredients which have no adverse effects on the magnetic head may be contained in the glass.

A preferable glass composition comprises 45 to 57% of V₂O₅, 20 to 30% of P₂O₅, 7 to 20% of Sb₂O₃, 5 to 20% of PbO, 5 to 10% Tl₂O, and 0.5 to 2% Nb₂O₅, and no more than 5% of at least one selected from the group consisting of BaO, TeO₂, GeO₂, Rb₂, Cₛ₂O, Na₂O and K₂O. Preferably, an amount of BaO + TeO₂ + GeO₂ is 0 to 15% by weight and an amount of Na₂O + K₂O + Rb₂O + Cₛ₂O is 0 to 3% by weight. Namely, glass Nos. 1, 2 and 4 of Table 3 were used in the magnetic film A of Table 1, and glass Nos. 3 and 5 were used in the magnetic film B.

In the Examples, materials (sputtering target) in Table 4 were sputtered to form a film with a thickness of about 200 nm (2000 Angstrom) to provide the intervening layer between the bonding glass and the material to be bonded. SiO₂ glass (material I) and Cr (material II) have a good wettability with the conventional oxide glass, such as PbO-B₂O₃, comprising lead element as a main constituent element, and therefore are used as the intervening layer in the currently-available amorphous alloy head and Sendust head, and in view of this, these materials were used for comparison purposes. These intervening layers are used not only to provide the wettability but also to prevent the conventional glass from eroding the magnetic film. However, in the vicinity of the gap portion, the glass is fused into the gap, and may often erode the magnetic film. The sputtering targets VI to VIII are made respectively of glasses having compositions shown in the Table. The sputtering targets IX to XII were prepared by mixing SiO₂ glass powder, Al₂O₃ powder or ZrO₂ powder with powder of glass No. 2 of Table 3 and then by sintering the mixture using a hot press. The sputtering targets I to IV used were commercially available ones.

The magnetic heads as shown in Fig. 1 were prepared using the magnetic films of Table 1, the substrates of Table 2, the bonding glass of Table 3 and the intervening layers of Table 4, and were evaluated.

**Table 1**

| Magnetic film | | Saturation magnetic flux density (G)* | Thermal expansion coefficient (× 10⁻⁷/°C) | Heat-resistance temperature (°C) |
|---|---|---|---|---|
| A | Amorphous Co based alloy (Co-Nb-Zr) | 9000 | 120 | 480 |
| B | Sendust alloy (Fe-Si-Al) | 11000 | 150 | 620 |
| C | Single crystal Mn/Zn ferrite | 5000 | 110 | 800 |

| | | | | |
|---|---|---|---|---|
| * 10 000 G = 1T | | | | |

**Table 2**

| Substrate | | Thermal expansion coefficient (× 10⁻⁷/°C) | Micro-Vickers Hardness (Hv) | Note |
|---|---|---|---|---|
| a | Single crystal Mn-Zn ferrite | 110 | 650 | Magnetic material (Material D of Table 1) |
| b | α-Fe₂O₃ ceramics | 115 | 900 | Non-magnetic material |
| c | MnO-NiO ceramics | 135 | 600 | Non-magnetic material |

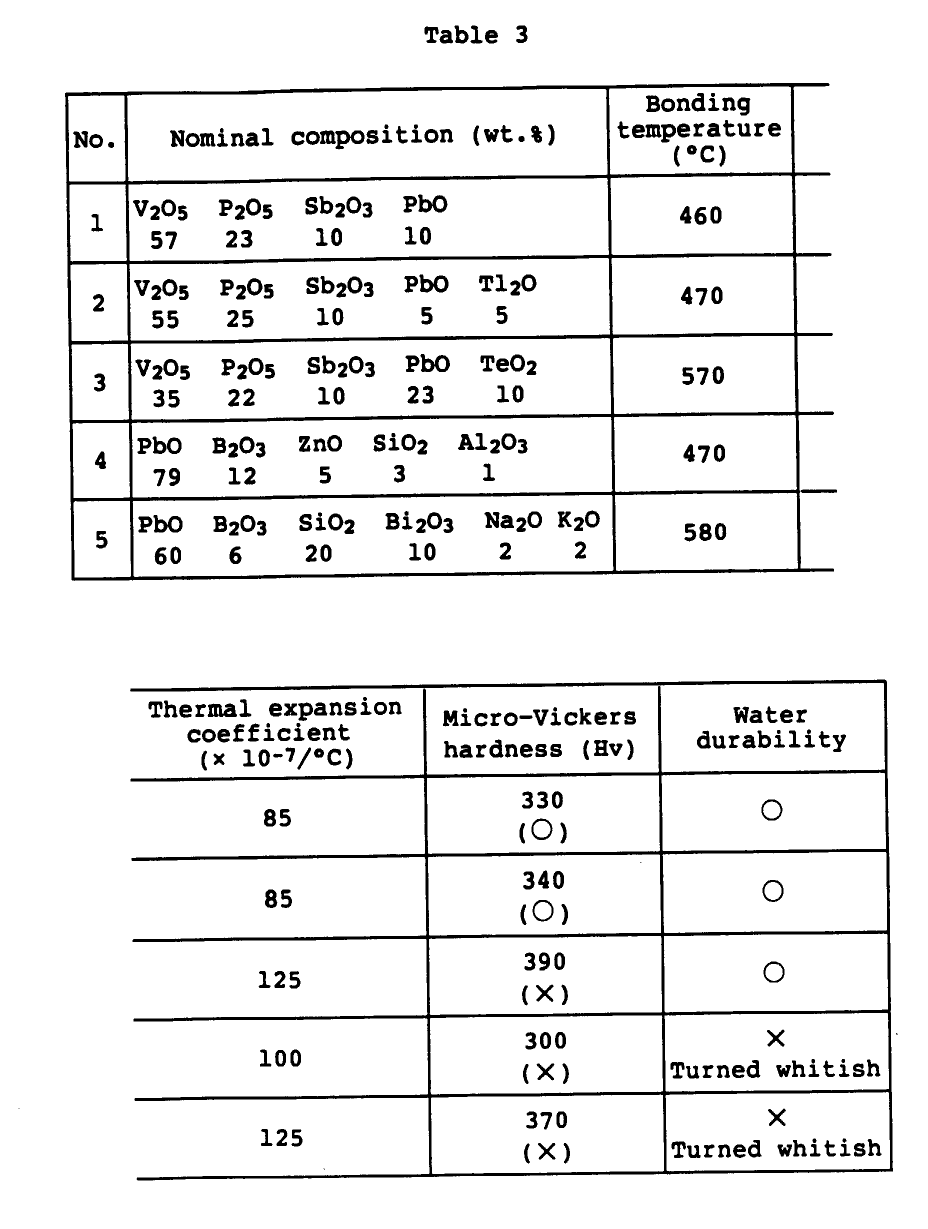

**Table 4**

| No. | Composition of sputtering target (wt.%) | Note |
|---|---|---|
| I | SiO₂ glass | |
| II | Cr | |
| III | V | |
| IV | V₂O₅ | |
| V | PbO | |
| VI | 60V₂O₅-40P₂O₅glass | |
| VII | 50V₂O₅-25P₂O₅-25Sb₂O₃glass | |
| VIII | Glass No. 1 | Composition is shown in Table 3 |
| IX | 25SiO₂glass + 75glass No. 1 | Mixture powder sintered product |
| X | 50SiO₂glass + 50glass No. 1 | Mixture powder sintered product |
| XI | 25Al₂O₃glass + 75glass No. 1 | Mixture powder sintered product |
| XII | 25ZrO₂glass + 75glass No. 1 | Mixture powder sintered product |

### (Example 1)

Magnetic heads as shown in Fig. 1 were prepared using the magnetic film A, the substrate a, the bonding glass Nos. 1 and 4, and the intervening layers of Table 4. The preparation temperatures, that is, the glass filling temperature and the glass bonding temperature, corresponded to the glass filling/bonding temperatures shown in Table 3. The heating was carried out in an atmosphere of nitrogen in order to prevent the oxidation of the magnetic film. The results of the mounted magnetic heads thus prepared are shown in Fig. 5. Here, the void defective ratio indicates the ratio of those heads in which a void of not less than 1 µm was observed at the glass bonding portion on the sliding surface of the head. The head tip strength was determined by a load breaking the head tip. The erosion against the magnetic film was judged through the observation by a microscope.

**Table 5**

| | Bonding glass | Intervening film | Void defective ratio (%) | Head tip strength (gf) | Erosion against magnetic film |
|---|---|---|---|---|---|
| Examples | No. 1 | III | 20 | 44 | almost none |
| | | IV | 16 | 45 | almost none |
| | | V | 5 | 44 | slightly occurred (whole) |
| | | VI | 4 | 49 | almost none |
| | | VII | 15 | 46 | almost none |
| | | VIII | 13 | 45 | slightly occurred (whole) |
| | | IX | 4 | 51 | almost none |
| | | X | 6 | 47 | almost none |
| | | XI | 5 | 48 | almost none |
| | | XII | 6 | 47 | almost none |
| | No. 4 | IX | 13 | 39 | occurred (gap portion) |
| Comparative Examples | No. 1 | None | 52 | 36 | slightly occurred (whole) |
| | | I | 47 | 39 | almost none |
| | | II | 44 | 40 | almost none |
| | No. 4 | None | 23 | 28 | markedly occurred (whole) |
| | | I | 14 | 38 | occurred (whole) |
| | | II | 4 | 34 | occurred (gap portion) |

As will be appreciated from the comparative Examples of Table 5, the oxide bonding glass No. 4 (which is conventionally used in an amorphous-alloy magnetic head) comprising lead element as a main constituent element markedly erodes the magnetic film of amorphous alloy. Therefore, it is necessary to provide the intervening layer between the magnetic film and the bonding glass. However, if the intervening layer is made of SiO₂ glass (I), the reactivity between this intervening layer I and the glass No. 4 is high, and the magnetic film is eroded as a whole although this erosion is not so severe as compared with that encountered without the intervening layer. In contrast, if the intervening layer is made of Cr (II), it hardly reacts with the glass No. 4, and therefore the magnetic film is not eroded except for that portion thereof near the gap portion. However, when the magnetic gap portion which is the heart of the magnetic head is eroded, this will greatly degrade the performance of the magnetic head. Further, since the intervening layer II has a good wettability with the glass No. 4, it has a feature that the void defective ratio is very low. However, as described above, the reactivity between the two is low, and besides the bonding glass itself has poor mechanical properties, and the breakage tends to begin from the bonding portion, so that the magnetic head having a high head tip strength can not be obtained. Further, as shown in Table 3, the glass No. 4 is a poor water durability, and therefore the reliability of the magnetic head is low. On the other hand, the oxide bonding glass No. 1 comprising vanadium element as a main constituent element has a feature that the amount of erosion of this glass against the magnetic film of amorphous alloy is very small, and therefore there is no need to worry about the erosion against the magnetic film if either of the above conventional intervening layers I and II is provided. However, each of the intervening layers I and II has a poor wettability with the glass No. 1, and therefore many voids deposit on the intervening layer, thus extremely increasing the void defective ratio. Namely, if either of the intervening layers I and II is combined with the glass No. 1, the yield rate of the magnetic head production is low, and the mass-producibility is low. Further, although the glass No. 1 is superior in mechanical properties to the glass No. 4, many voids as mentioned above exist at the bonding portion, and its reactivity with the intervening layers I and II is poor, and therefore the expected head tip strength was not obtained. However, the head tip strength tends to be higher than that of the above conventional magnetic head, and besides the glass No. 1 has a good water durability, and therefore the reliability of the magnetic head is considered as high.

In contrast with the above comparative Examples, in the Examples of the present invention, the oxide bonding glass No. 1 comprising vanadium element as a main constituent element is used in combination with the intervening layers IV to XII having the constituent element of this glass. Therefore, the wettability is improved, and the void defective ratio is extremely decreased. Namely, by using these intervening layers, the yield rate of the head production can be improved, and the mass-producibility can be enhanced. Particularly, when any of the intervening layers V, VI and IX to XII is used, its effect is very great. Further, with the decrease of the void defective ratio, the head tip strength is increased, and above all, when the intervening layers VI and IX to XII were used, the magnetic heads having a high strength were obtained. There is almost no problem with the erosion against the magnetic film of amorphous alloy; however, when the intervening layers VI and VIII were used, a slight erosion was recognized as in the case where no intervening layer is used. This is because the reactivity between the glass No. 1 and the intervening layer VI is very good and because the intervening layer VIII is the film of the glass No. 1 whose filling/bonding temperature is low. However, a layer which hardly reacts with the oxide bonding glass comprising vanadium element as a main constituent element (for example, a film of SiO₂ glass) is further interposed between such intervening layer and the magnetic film, the above erosion against the magnetic film can be easily prevented. As described above, when the intervening layers VI and IX to XII were used, particularly good results were obtained, and these intervening layers have a good wettability with the glass No. 1, and besides appropriate reactivity and thermostability. The sputtering targets for the intervening layers IX to XII comprise a mixture of the glass No. 1 (whose filling/bonding temperature is low) and SiO₂ glass, Al₂O₃, or ZrO₂. The glass No. 1 functions to improve the wettability of the intervening layer and to promote the reactivity whereas SiO₂ glass, Al₂O₃, and ZrO₂ function to improve the thermostability of the intervening layer and to restrain the reactivity. Namely, SiO₂ glass, Al₂O₃ and ZrO₂ contained in the sputtering targets for the intervening layers are not limitative, and may be replaced by any high melting point material.

Next, in the Example, the magnetic head of amorphous alloy as shown in Fig. 1 was prepared using the glass No. 4 comprising lead element as a main constituent element, and the intervening layer IX. As a result, the reaction between the bonding glass and the intervening layer was restrained, and therefore the erosion against the magnetic film was restrained to a greater extent than when using the intervening layer of SiO₂ glass, and besides the decrease of the head tip strength as is the case with the Cr intervening layer II was not recognized. Thus, even when the conventional bonding glass is used, the intervening layer of the present invention is effective. However, the erosion against the magnetic film at the gap portion was observed as when using the intervening layer II. This erosion can be prevented by using a gap material containing vanadium element similar to that of the intervening layer IX.

The intervening layers defined in the present invention will now be described.

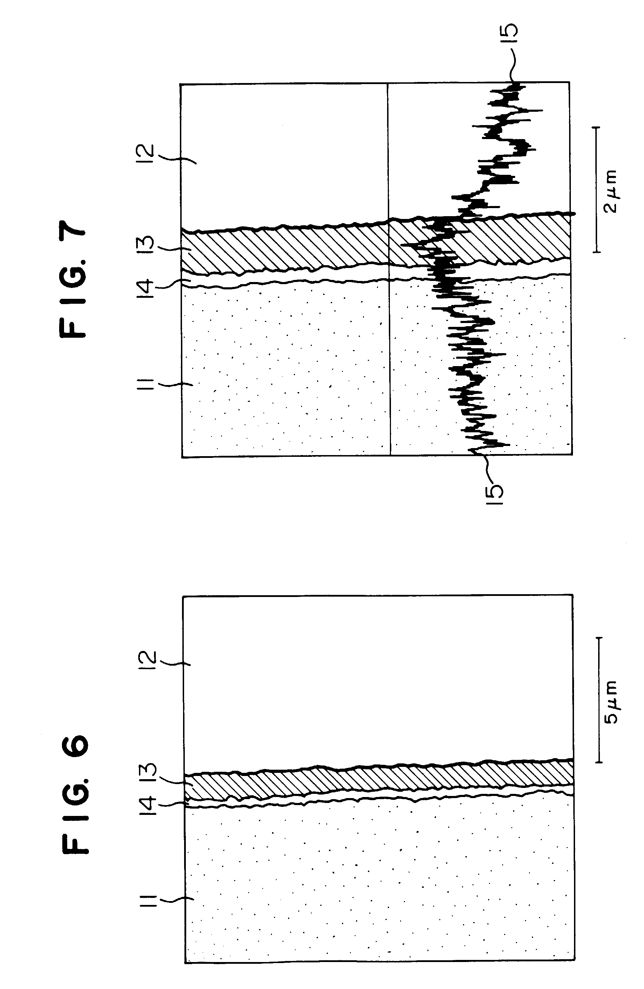

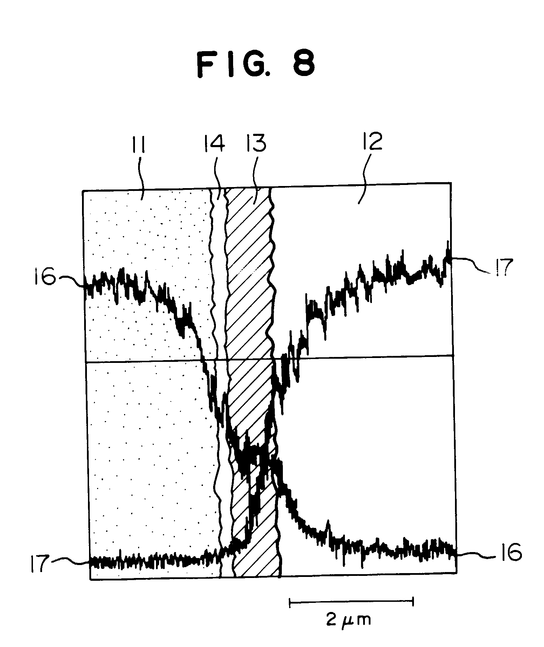

The structure of the bonding interface portion obtained when the bonding glass and the intervening layer have the same composition (the combination of the glass No. 1 of Table 3 with the intervening layer VIII of Table 4) was observed by SEM, and results of this observation are shown in Figs. 6, 7 and 8.

However, here, an actual magnetic head was not used, but the intervening-layer VIII (13) of about 700 nm (7000 Angstrom), using the sputtering target having the same composition as that of the glass No. 1 (11), was formed by sputtering on a ferrite substrate 12, and then the glass No. 1 (11) was melted on this ferrite substrate 12 at 460° in nitrogen gas, and a cut surface thereof was observed.

As can be seen from Figs. 6, 7 and 8, the intervening layer VIII (13) was observed as darker in color strength than the bulk material of the glass No. 1, and remained as the layer about 700 nm (7000 Angstrom) in thickness as before the bonding. An analysis of the intervening layer VIII (13) by EDX indicated that the vanadium element 16 in this layer was decreased in a larger amount than that in the bulk material of the glass No. 1 (11). The reason is thought to be that generally, it is difficult for the intervening layer 13 and the bonding glass 11 to have the same composition by a sputtering method even if this is intended, so that a slight difference in composition is encountered. Further, a white stripe 14 having a thickness of about 2000 Angstrom was observed at the boundary (bonding interface portion) between the bonding glass No. 1 (11) and the intervening layer VIII (13). An analysis of this white stripe layer 14 by EDX indicated that the amount of antimony 15 increased. The reason is thought to be that the antimony gathered at the bonding interface portion because the free energy of the antimony is small.

As described above, although the intervening layer defined in the present invention can suitably react with the bonding glass and the material to be bonded at the bonding interface therebetween, this intervening layer exists as a single layer.

When the intervening layer and the bonding glass have different compositions, the existence of the intervening layer can be more clearly recognized.

### (Example 2)

Magnetic heads as shown in Fig. 1 were prepared using the magnetic film A, the substrate b, the bonding glass No. 2, and the intervening layers of Table 4. The results of the mounted magnetic heads thus prepared are shown in Table 6. A method of evaluating the magnetic head is similar to that in Example 1.

**Table 6**

| | Intervening film | Void defective rate (%) | Head tip strength (gf) | Erosion against magnetic film |
|---|---|---|---|---|
| Examples | IV | 9 | 48 | almost none |
| | VI | 5 | 53 | almost none |
| | IX | 4 | 54 | almost none |
| | X | 6 | 52 | almost none |
| Comparative Examples | I | 35 | 41 | almost none |
| | II | 27 | 41 | almost none |

As can be seen from the comparative Examples of Table 6, when the conventional intervening layers I and II were used in combination with the oxide bonding glass No. 2 comprising vanadium element as a main constituent element, the erosion against the magnetic film was not recognized as in the comparative examples in Example 1; however, the void defective ratio was high, and besides the expected head tip strength was not obtained. In contrast with these comparative Examples, in the Examples of the present invention, in combination with the oxide bonding glass No. 2 comprising vanadium element as a main constituent element, the intervening layers IV, VI, IX and X containing a constituent element of this glass is used, and therefore the wettability is improved, and the void defective ratio is extremely lowered. Namely, by using these intervening layers, the yield rate of the head production can be improved, and the mass-producibility can be enhanced. Further, with the decrease of the void defective ratio, the head tip strength is increased, and therefore the reliability of the magnetic head can be enhanced. Further, the erosion against the magnetic film was not recognized, and therefore the high-performance magnetic head well enjoying the benefit of the characteristics of the magnetic film can be obtained.

### (Example 3)

Magnetic heads as shown in Fig. 1 were prepared using the magnetic film B, the substrate c, the bonding glass Nos. 3 and 5, and the intervening layers of Table 4. The results of the mounted magnetic heads thus prepared are shown in Table 7. A method of evaluating the magnetic head is similar to that in Example 1.

**Table 7**

| | Bonding glass | Intervening film | Void defective ratio (%) | Head tip strength (gf) | Erosion against magnetic film |
|---|---|---|---|---|---|
| Comp. Ex. | No. 3 | III | 17 | 47 | almost none |
| Examples | | VI | 4 | 52 | almost none |
| | | VII | 12 | 49 | almost none |
| | | IX | 3 | 54 | almost none |
| | | X | 4 | 50 | almost none |
| | | XI | 6 | 50 | almost none |
| | | XII | 7 | 49 | almost none |
| | No. 5 | X | 13 | 45 | occurred (gap portion) |
| Comparative Examples | No. 3 | None | 48 | 42 | slightly occurred (whole) |
| | | I | 43 | 45 | almost none |
| | | II | 40 | 44 | almost none |
| | No. 5 | None | 19 | 37 | markedly occurred (whole) |
| | | I | 12 | 45 | occurred (whole) |
| | | II | 3 | 41 | occurred (gap portion) |

As will be appreciated from Table 7, similar results as obtained with the magnetic heads of amorphous alloy in Example 1 and Example 2 were also obtained with the magnetic head of Sendust alloy. The oxide glass No. 5 used in the comparative Examples comprising lead element as a main constituent element markedly erodes the magnetic alloy of Sendust alloy, and therefore it is necessary to provide the intervening layer between the magnetic film and the bonding glass. However, even when the conventional intervening layers I and II were provided, the erosion against the magnetic film could not be prevented. However, in the combination of the glass No. 5 and the intervening layer II, good results of the void defective ratio were obtained. On the other hand, in the combination of the oxide bonding glass No. 3 (which comprises vanadium element as one of main constituent elements) and the intervening layers I and II, the erosion against the magnetic film could be prevent almost completely. The head tip strength was higher as compared with the case of using the glass No. 5, and good results were obtained. However, since the void defective ratio is high, the yield rate of the head production is low, and the mass-producibility is poor.

In contrast with the above comparative Examples, in the Examples of the present invention, the oxide bonding glass No. 3 comprising vanadium element as one of main constituent elements is used in combination with the intervening layers III, VI, VII and IX to XII containing a constituent element of this glass. Therefore, the wettability was improved, and the boid defective ratio was markedly decreased. Particularly when the intervening layers VI and IX to XII were used as in Example 1, the void defective ratio could be reduced to a level generally equal to that obtained with the combination of the glass No. 5 (PbO-B₂O₃ glass) and the intervening layer II (Cr). Namely, by using these intervening layers, the yield rate of the head production can be improved, and the mass-producibility can be enhanced. Further, with the decrease of the void defective ratio, the head tip strength increased, and therefore the reliability of the magnetic head can be enhanced. Further, since the erosion against the magnetic film was not recognized, the high-performance magnetic head well enjoying the benefit of the characteristics of the magnetic film can be obtained.

Next, in the Example, the magnetic head of Sendust alloy as shown in Fig. 1 was prepared using the oxide glass No. 5 comprising lead element as a main constituent element and the intervening layer X containing vanadium element. As a result, as described in Example 1, the reaction between the bonding glass and the intervening layer is restrained, the erosion from the intervening layer of SiO₂ glass to the magnetic film was restrained, and besides the decrease of the head tip strength as in the Cr intervening layer II was not recognized. Thus, even when the convectional bonding glass is used, the intervening layer of the present invention is effective. However, as is the case of using the intervening layer II, the erosion against the magnetic film at the gap portion was observed. This erosion can be prevented by using the gap material containing the same vanadium element as contained in the intervening layer X.

According to the present invention, the voids produced at the time of the glass filling and the glass bonding, and particularly the voids deposited on the material to be bonded are liable to move, and therefore the residual voids can be markedly reduced. Further, although the bonding glass used in the present invention enables a low-temperature bonding, the glass is superior in water durability and mechanical properties to the conventional oxide bonding glass comprising lead element oxide as a main constituent element, and besides hardly erodes the magnetic film of a high saturation magnetic flux density. Therefore, when the amount of voids is decreased by the intervening layer in the present invention, the excellent characteristics of the bonding glass can be sufficiently utilized, and the high-performance magnetic head excellent in mass-producibility and reliability can be obtained.

Further, according to the present invention, since the bonding glass and the intervening layer suitably react with each other, the reaction against the magnetic film is restrained, and besides the magnetic head having a suitable bonding strength can be obtained. Further, since the intervening layer prevents the erosion of the magnetic film at the gap portion, it is effective as the gap material.

The glass bonding technique in the above magnetic heads of the present invention can be applied to the conventional ferrite head. Further, this technique can be well applied to a low-temperature bonding in other fields than the magnetic head.

## Claims

1. A magnetic head comprising a pair of magnetic cores opposed to each other with a magnetic gap (3) provided therebetween, each of said magnetic cores having a magnetic film (1, 1') formed thereon, said magnetic cores being bonded by glass (4, 4') through intervening layers (5, 5') each provided between the magnetic film (1, 1') and the glass (4, 4'),
**characterized** in that
said glass (4, 4') contains at least vanadium, and that said intervening layer (5, 5') is an oxide layer containing at least one of constituent elements of said glass (4, 4').

2. A magnetic head according to claim 1, in which said intervening layer (5, 5') contains vanadium oxide.

3. A magnetic head according to claim 1 or 2, in which said intervening layer (5, 5') contains at least one oxide having a melting point equal to or higher than a melting point of silicon oxide.

4. A magnetic head according to claim 1, in which said intervening layer (5, 5') contains vanadium oxide and at least one oxide selected from the group of silicon oxide, aluminium oxide and zirconium oxide.

5. A magnetic head according to claim 1, in which said intervening layer (5, 5') is an oxide glass layer containing vanadium oxide as a necessary content and at least one oxide selected from the group of silicon oxide, aluminium oxide and zirconium oxide.

## Patentansprüche

1. Magnetkopf, der ein Paar von Magnetkernen aufweist, die einander mit einem dazwischen vorgesehenen Magnetspalt (3) gegenüberstehen, wobei jeder der Magnetkerne einen darauf gebildeten Magnetfilm (1, 1') trägt und die Magnetkerne durch Glas (4, 4') über Zwischenschichten (5, 5') verbunden sind, deren jede zwischen dem Magnetfilm (1, 1') und dem Glas (4, 4') vorgesehen ist,
dadurch gekennzeichnet, daß
das Glas (4, 4') wenigstens Vanadin enthält und daß die Zwischenschicht (5, 5') eine Oxidschicht ist, die wenigstens eines der Bestandteilselemente des Glases (4, 4') enthält.

2. Magnetkopf nach Anspruch 1, bei dem die Zwischenschicht (5, 5') Vanadinoxid enthält.

3. Magnetkopf nach Anspruch 1 oder 2, bei dem die Zwischenschicht (5, 5') wenigstens ein Oxid mit einem einem Schmelzpunkt von Siliziumdioxid gleichen oder überlegenen Schmelzpunkt enthält.

4. Magnetkopf nach Anspruch 1, bei dem die Zwischenschicht (5, 5') Vanadinoxid und wenigstens ein Oxid enthält, das aus der Gruppe von Siliziumdioxid, Aluminiumoxid und Zirkoniumoxid gewählt ist.

5. Magnetkopf nach Anspruch 1, bei dem die Zwischenschicht (5, 5') eine Oxidglasschicht ist, die Vanadinoxid als nötigen Bestandteil und wenigstens ein Oxid enthält, das aus der Gruppe von Siliziumdioxid, Aluminiumoxid und Zirkoniumoxid gewählt ist.

## Revendications

1. Tête magnétique comprenant une paire de noyaux magnétiques opposés l'un à l'autre avec un entrefer magnétique (3) présent entre eux, chacun desdits noyaux magnétiques comportant un film magnétique (1, 1') formé sur celui-ci, lesdits noyaux magnétiques étant fixés par du verre (4, 4'), par l'intermédiaire de couches intermédiaires (5, 5') disposées chacune entre le film magnétique (1, 1') et le verre (4, 4'), caractérisée en ce que :
ledit verre (4, 4') contient au moins du vanadium, et en ce que ladite couche intermédiaire (5, 5') est une couche d'oxyde contenant au moins l'un des éléments constitutifs dudit verre (4, 4').

2. Tête magnétique selon la revendication 1, dans laquelle ladite couche intermédiaire (5, 5') contient de l'oxyde de vanadium.

3. Tête magnétique selon la revendication 1 ou 2, dans laquelle ladite couche intermédiaire (5, 5') contient au moins un oxyde ayant un point de fusion supérieur ou égal au point de fusion de l'oxyde de silicium.

4. Tête magnétique selon la revendication 1, dans laquelle ladite couche intermédiaire (5, 5') contient de l'oxyde de vanadium et au moins un oxyde sélectionné parmi le groupe comprenant l'oxyde de silicium, l'oxyde d'aluminium et l'oxyde de zirconium.

5. Tête magnétique selon la revendication 1, dans laquelle ladite couche intermédiaire (5, 5') est une couche d'oxyde et de verre contenant de l'oxyde de vanadium comme composant nécessaire et au moins un oxyde sélectionné parmi le groupe comprenant l'oxyde de silicium, l'oxyde d'aluminium et l'oxyde de zirconium.
